# EUROPEAN PATENT SPECIFICATION

(11) **EP 0 670 093 B1**
(45) Date of publication and mention of the grant of the patent: **13.01.1999**
(21) Application number: 93923619.6
(22) Date of filing: 25.10.1993
(51) Int. Cl.: H04L 27/14, H03D 3/02, H03H 7/19

(54) **HIGH SPEED FSK DEMODULATOR**
HOCHGESCHWINDIGKEITS-FSK-DEMODULATOR
DEMODULATEUR F.S.K RAPIDE

(30) Priority: 23.11.1992 US 980071
(43) Date of publication of application: 06.09.1995
(73) Proprietor: FORD MOTOR COMPANY, Dearborn, MI 48126 (US)
(72) Inventor: KENNEDY, John, Francis, Garden City, MI 48135 (US); PLOWDREY, Robert, Donald, Livonia, MI 48152 (US)
(74) Representative: Messulam, Alec Moses
(86) International application number: PCT/GB93/02202
(87) International publication number: WO 94/13084

(56) References cited:
- DE-B- 2 516 679
- GB-A- 2 032 737
- US-A- 3 569 845
- US-A- 3 739 288
- PATENT ABSTRACTS OF JAPAN vol. 6, no. 37 (E-97)(915) 6 March 1982 & JP,A,56 156 012 (NIPPON DENKI K. K.)

## Description

The present invention relates in general to decoding frequency-shift keying (FSK) signals, and more specifically to an FSK decoding scheme having a fast response time by avoiding integration in the decoder.

Frequency-shift keying is a well-known method for representing binary data using a first frequency to represent a binary zero and a second frequency to represent a binary one. When the binary digit to be represented changes, the frequency of the FSK signal shifts from one frequency to the other. Although the frequency shifts abruptly, FSK systems typically employ a continuous phase, i.e., there is no phase discontinuity when the frequency shifts.

Frequency-shift keying is a type of frequency modulation and can be used to transmit digital information by radio waves. FSK modulation is also used in transmitting binary information over phone lines using modems.

Demodulation of FSK signals typically employs FM detection techniques which include filtering with long time constants or other integration of the FSK signal. For example, the FSK signal to be demodulated is applied to the inputs of a pair of bandpass filters having respective centre frequencies corresponding to the two frequencies of the FSK signal. The filter outputs are coupled to the inputs of a differential amplifier which recreates the digital signal. However, the integration time constants of the filters introduce a time delay slowing down the response time of the FSK demodulator.

Other demodulation techniques rely on the use of quadrature mixing signals to generate quadrature and in-phase FSK components for detection, resulting in high part count and high cost.

US-A-3 739 288 describes a circuit and method for converting an input signal represented by two different frequencies into a digital representation. The input signal is fed to a shaper initially and is fed from the shaper to a phase shifting circuit that generates a signal that leads or lags the input signal depending upon which of the two frequencies occur. The signal from the shaper and the phase shifted signal from the phase shifting circuit are both supplied to a phase detecting circuit. The phase detecting circuit provides the digital output signal indicating whether the phase shifting circuit leads or lags the input signal.

The phase shifting circuit is formed from an operational amplifier having a first band pass filter for the frequency range of interest connected to its non inverting input. A second band reject filter with a centre frequency in the band of interest is connected between the amplifier output and the inverting input to the amplifier.

DE-B-25 16 679 describes a data transmission system connecting two data stations. At each station is arranged a data source, a modulator, a double switch, filters, an amplifier and a demodulator. Depending on the setting of the switches, each station can send frequency modulated data to the other. The demodulator consists of an input terminal connected to supply an input signal to both a frequency dependent phase shift circuit and to a first input of a multiplier. The output of the phase shift circuit is also applied to a second input of the multiplier thereby to generate a demodulated output which depends on the frequency of the input signal.

US-A-3 569 845 describes a wide band frequency discriminator in which the frequency to be detected is applied simultaneously to one input of a wide band phase detector, such as a diode switch circuit, and through an all pass equaliser network to another input of the phase detector. The all pass equaliser network has a transfer function whose amplitude characteristic is independent of signal frequencies.

The invention has the object and advantage of demodulating FSK signals at high speed with a low part count and a low cost.

Specifically, the invention demodulates an FSK signal which shifts between a first frequency f₁ and a second frequency f₂ to encode digital information. Wave-shaping means shape the FSK signal to generate substantially identical first and second wave-shaped signals. Phase-shifting means receives the first wave-shaped signal for generating a phase-shifted signal. The phase-shifting means has a frequency response at frequency f₁ different from its frequency response at frequency f₂. Sampling means samples one of the phase-shifted signal or the second wave-shaped signal in response to a transition in the other one of the phase-shifted signal or the second wave-shaped signal to generate a decoded signal. The phase-shifting means is comprised of a high Q tank circuit having a resonant frequency f₀ substantially halfway between f₁ and f₂. The sampling means is preferably comprised of a D-type flip-flop.

The invention will now be described further, by way of example, with reference to the accompanying drawings, in which:

Figure 1 is a schematic diagram showing a decoder according to the present invention.

Figure 2 is a frequency response curve provided by the tank circuit of Figure 1.

Figures 3-6 show waveform diagrams at respective points in the circuit of Figure 1 during operation.

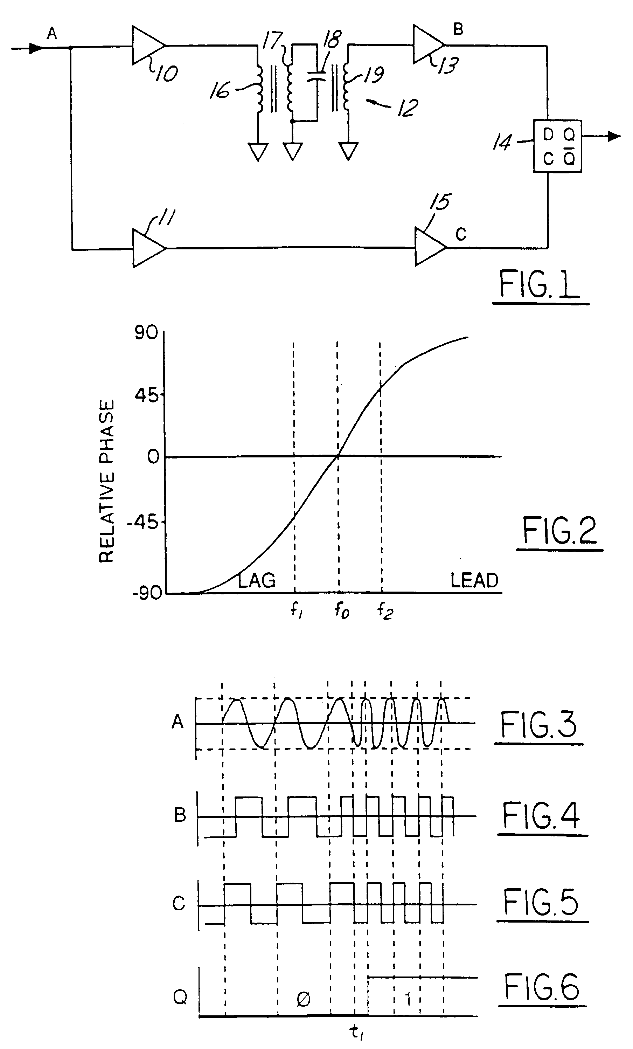

As shown in Figure 1, an input FSK signal A obtained from an antenna, phone line, or other source (not shown) is coupled to the input of an amplifier 10 and the input of an amplifier 11. The output of amplifier 10 is connected to the input of a resonant circuit 12. The output of resonant circuit 12 is connected to the input of an amplifier 13. An output signal B from amplifier 13 is connected to the D input of a D-type flip-flop 14. The output of amplifier 11 is connected to the input of an amplifier 15 which produces a C output signal coupled to the C input of D flip-flop 14.

Resonant circuit 12 includes an inductor 16 inductively coupled to an inductor 17. A capacitor 18 is connected in parallel with inductor 17. An inductor 19 is magnetically coupled to inductor 17 and provides the output of the resonant circuit 12. In this preterred embodiment, resonant circuit 12 takes the torm of a tank circuit which is a parallel resonant circuit having a resonant frequency f₀ at a frequency between the frequencies f₁ and f₂ used by the FSK signal to encode binary digits. Resonant circuit 12 has a high Q factor (by virtue of a low effective series resistance) in order to insure very low integration of the FSK signal. Consequently, resonant circuit 12 alters the phase of the FSK signal but introduces very little time delay, thus enabling fast decoding of the FSK signal.

As shown in Figure 2, resonant circuit 12 provides a relative phase change according to the frequency of its input signal. At frequency f₁, the resonant circuit introduces a phase lag. At frequency f₂, a phase lead is introduced. Although phase shifts of about 45 provide the best accuracy of detection, much smaller relative phase shifts can be employed using the decoder of the present invention.

Amplifiers 10, 11, 13, and 15 are comprised of very high gain amplifiers yielding nonlinear amplification to produce square-wave signals which indicate transitions in the respective input signals. Other forms of square-waved generators can alternatively be employed, such as zero crossing detectors.

The input FSK signal A is shown in Figure 3 which shifts from frequency f₁ to frequency f₂ at a time t₁. FSK signal A is amplified and limited in amplifiers 10 and 11 to produce wave-shaped (i.e., square-wave) signals indicating zero crossings of FSK signal A. Prior to time t₁ while FSK signal A has a frequency f₁, resonant circuit 12 introduces a phase lag resulting in output signal B relative to FSK signal A as shown in Figure 4.

Amplifiers 11 and 15 provide an output signal C, shown in Figure 5, which is identical to the output signal produced at B except for the phase alteration introduced by resonant circuit 12.

Flip-flop 14 receives output signal C at its clock; input C so that output signal B is sampled at each positive transition in output signal C. Output signal B applied to the D input of flip-flop 14 is shifted in phase relative to output signal C dependinq upon whether the FSK signal is transmitted at f₁ or f₂. Due to the phase shift, flip-flop 14 will provide an output signal Q according to the phase difference. As shown in Figure 6, output signal Q switches to a high output signal after a short time delay following time t₁. This delay is due to residual stored energy in the tank circuit.

In the preferred embodiment of Figure 1, amplifiers- fiers 10, 11, 13 and 15 have a slew rate and a bandwidth product at least ten times greater than frequency f₂. Providing a Q factor for resonant circuit 12 of about 300, the present invention was able to detect a shift in the FSK frequency within three cycles of the FSK signal. Even faster detection can be obtained if desired using a resonant circuit with a higher Q factor.

It will be apparent to those skilled in the art that other types of resonant phase-altering devices can be employed other than the tank circuit, such as a ceramic filter, a crystal or a SAW filter. In addition, nonresonant circuits can be employed to introduce the necessary phase difference, such as high-pass or low-pass RC filters.

Flip-flop 14 could be replaced with other known sample-and-hold devices. Furthermore, the inputs to flip-flop 14 could be reversed, resulting in the inversion of the decoded output signal.

## Claims

1. Apparatus for demodulating a frequency shift keying (FSK) signal which shifts between a first frequency fl and a second frequency f2 to encode digital information, the apparatus having:
wave-shaping means (10,17) for shaping said FSK signal to generate substantially identical first and second wave-shaped signals;
phase-shifting means (12) receiving said first wave-shaped signal for generating a phase-shifted signal, said phase-shifting means having a frequency response at frequency fl different from its frequency response at frequency f2; and
sampling means (14) for sampling one of said phase-shifted signal or said second wave-shaped signal in response to a transition in said other one of said phase-shifted signal or said second wave-shaped signal to generate a decoded signal, characterised in that; the phase-shifting means (12) consists of a high Q tank circuit having a resonant frequency f0 between said first frequency fl and said second frequency f2.

2. An apparatus as claimed in claim 1, wherein said wave-shaping means include means for generating a square-wave signal having transitions in response to zero crossings of said FSK signal.

3. An apparatus as claimed in claim 1 or 2, wherein said wave-shaping means is comprised of a nonlinear amplifier.

4. An apparatus as claimed in claim 1, 2, or 3, wherein said resonant frequency f0 is substantially halfway between said first frequency fl and said second frequency f2.

5. An apparatus as claimed in any one of the preceding claims, wherein said sampling means is comprised of a D-type flip-flop having one of said phase-shifted signal or said second wave-shaped signal coupled to its D input and having the other one of said phase-shifted signal or said second wave-shaped signal coupled to its clock input.

6. A method for demodulating a frequency-shift keying (FSK) signal which shifts between a first frequency f1 and a second frequency f2 to encode digital information, the method including the steps of:
generating substantially identical first and second wave-shaped signals in response to said FSK signal;
phase-shifting said first wave-shaped signal to generate a phase-shifted signal either leading or lagging said second wave-shaped signal depending on whether said first wave-shaped signal exhibits said frequency f1 or said frequency f2; and
sampling one of said phase-shifted or said second wave-shaped signal in response to a transition in said other of said phase-shifted signal or said second wave-shaped signal to generate a decoded signal,
characterised in that the step of phase-shifting said first wave-shaped signal is performed by means of a high Q tank circuit having a resonant frequency f0 between said first frequency f1 and said second frequency f2.

## Patentansprüche

1. Ein Gerät, um ein Signal aus Frequenzmodulation mit Frequenzumtastung (FSK), das sich zwischen einer ersten Frequenz f1 und einer zweiten Frequenz f2 zur Kodierung digitaler Information bewegt, zu demodulieren, wobei das Gerät folgendes aufweist:
Eine Wellenformvorrichtung (10, 17) zur Formung dieses FSK-Signals, um ein im wesentlichen identisches erstes und zweites, wellenförmiges Signal zu erzeugen;
eine Vorrichtung (12) zur Phasenverschiebung, die dieses erste wellenförmige Signal zur Erzeugung eines phasenverschobenen Signals empfängt, wobei diese Vorrichtung zur Phasenverschiebung ein Frequenzverhalten bei der Frequenz f1 besitzt, das sich von ihrem Frequenzverhalten bei der Frequenz f2 unterscheidet; und
eine Abtastvorrichtung (14), um eines dieser phasenverschobenen Signale oder dieses zweite wellenförmige Signal als Antwort auf einen Übergang in diesem anderen dieser phasenverschobenen Signale oder diesem zweiten wellenförmigen Signal zur Erzeugung eines dekodierten Signals abzutasten;
dadurch gekennzeichnet, daß die Vorrichtung (12) zur Phasenverschiebung aus einem Speicherschaltkreis mit hohem Q besteht, der eine Resonanzfrequenz f0 zwischen dieser ersten Frequenz f1 und dieser zweiten Frequenz f2 besitzt.

2. Ein Gerät nach Anspruch 1, worin diese Wellenformvorrichtung eine Vorrichtung zur Erzeugung eines Rechteckwellensignals umfaßt, dessen Übergänge als Antwort auf den Schnitt der Nullinie durch dieses FSK-Signal stattfinden.

3. Ein Gerät nach Anspruch 1 oder 2, worin diese Wellenformvorrichtung aus einem nichtlinearen Verstärker besteht.

4. Ein Gerät nach Anspruch 1, 2 oder 3, worin sich diese Resonanzfrequenz f0 im wesentlichen in der Mitte zwischen dieser ersten Frequenz f1 und dieser zweiten Frequenz f2 befindet.

5. Ein Gerät nach irgendeinem der vorhergehenden Ansprüche, worin diese Abtastvorrichtung aus einem D-Flipflop besteht, an dessen D-Eingang eines dieser phasenverschobenen Signale oder dieses zweite wellenförmige Signal angelegt wird, und an dessen Takteingang das jeweils andere dieser phasenverschobenen Signale oder dieses zweite wellenförmige Signal angelegt wird.

6. Ein Verfahren, um ein Signal aus Frequenzmodulation mit Frequenzumtastung (FSK), das sich zwischen einer ersten Frequenz f1 und einer zweiten Frequenz f2 zur Kodierung digitaler Information bewegt, zu demodulieren, wobei das Verfahren folgende Schritte umfaßt:
Die Erzeugung eines im wesentlichen identischen ersten und zweiten wellenförmigen Signals als Antwort auf dieses FSK-Signal;
die Phasenverschiebung dieses ersten wellenförmigen Signals, um ein phasenverschobenes Signal zu erzeugen, das diesem zweiten wellenförmigen Signal in Abhängigkeit davon, ob dieses erste wellenförmige Signal jeweils diese Frequenz f1 oder diese Frequenz f2 aufweist, vorauseilt oder nacheilt; und
das Abtasten eines dieser phasenverschobenen oder dieses zweiten wellenförmigen Signals als Antwort auf einen Übergang in diesem anderen dieser phasenverschobenen Signale oder diesem zweiten wellenförmigen Signal, um ein dekodiertes Signal zu erzeugen,
dadurch gekennzeichnet, daß der Schritt der Phasenverschiebung dieses ersten wellenförmigen Signals mittels eines Speicherschaltkreises mit hohem Q durchgeführt wird, dessen Resonanzfrequenz f0 zwischen dieser ersten Frequenz f1 und dieser zweiten Frequenz f2 liegt.

## Revendications

1. Dispositif destiné à démoduler un signal de codage par sauts de fréquence (FSK) qui saute entre une première fréquence f₁ et une seconde fréquence f₂ pour coder des informations numériques, le dispositif comportant :
un moyen de mise en forme d'ondes (10, 17) destiné à mettre en forme ledit signal de code FSK afin de générer des premier et second signaux pratiquement identiques à ondes mises en forme,
un moyen de déphasage (12) recevant ledit premier signal à ondes mises en forme afin de générer un signal déphasé, ledit moyen de déphasage présentant une réponse en fréquence à une fréquence f₁ différente de sa réponse en fréquence à une fréquence f₂, et
un moyen d'échantillonnage (14) destiné à échantillonner l'un dudit signal déphasé ou dudit second signal à ondes mises en forme en réponse à une transition dans ledit autre dudit signal déphasé ou dudit second signal à ondes mises en forme afin de générer un signal décodé,
caractérisé en ce que
le moyen de déphasage (12) est constitué d'un circuit bouchon à facteur de qualité Q élevé présentant une fréquence de résonance fo entre ladite première fréquence f₁ et ladite seconde fréquence f₂.

2. Dispositif selon la revendication 1, dans lequel ledit moyen de mise en forme d'ondes comprend un moyen destiné à générer un signal à ondes carrées présentant des transitions en réponse aux passages par zéro dudit signal de code FSK.

3. Dispositif selon la revendication 1 ou 2, dans lequel ledit moyen de mise en forme d'ondes est constitué d'un amplificateur non linéaire.

4. Dispositif selon la revendication 1, 2 ou 3, dans lequel ladite fréquence de résonance fo est pratiquement à mi-chemin entre ladite première fréquence f₁ et ladite seconde fréquence f₂.

5. Dispositif selon l'une quelconque des revendications précédentes, dans lequel ledit moyen d'échantillonnage est constitué d'une bascule de type D dont l'un dudit signal déphasé ou dudit second signal à ondes mises en forme est relié à son entrée D et dont l'autre dudit signal déphasé ou dudit second signal à ondes mises en forme est relié à son entrée d'horloge.

6. Procédé de démodulation d'un signal à codage par sauts de fréquence (FSK) qui saute entre une première fréquence f₁ et une seconde fréquence f₂ afin de coder des informations numériques, le procédé comprenant les étapes consistant à :
générer des premier et second signaux à ondes mises en forme pratiquement identiques en réponse audit signal de code FSK,
déphaser ledit premier signal à ondes mises en forme afin de générer un signal à ondes mises en forme soit en avance, soit en retard sur ledit second signal à ondes mises en forme suivant si ledit premier signal à ondes mises en forme présente ladite fréquence f₁ ou ladite fréquence f₂, et
échantillonner l'un dudit signal déphasé ou dudit second signal à ondes mises en forme en réponse à une transition dudit autre dudit signal déphasé ou dudit second signal à ondes mises en forme afin de générer un signal décodé,
caractérisé en ce que l'étape de déphasage dudit premier signal à ondes mises en forme est exécutée au moyen d'un circuit bouchon à facteur de qualité Q élevé présentant une fréquence de résonance f₀ entre ladite première fréquence f₁ et ladite seconde fréquence f₂.
